# EUROPÄISCHE PATENTSCHRIFT

(11) **EP 4 185 785 B1**
(45) Veröffentlichungstag und Bekanntmachung des Hinweises auf die Patenterteilung: **12.11.2025**
(21) Anmeldenummer: 21743097.4
(22) Anmeldetag: 07.07.2021
(51) Int. Cl.: F16D 25/08

(54) **KUPPLUNGSVORRICHTUNG FÜR EIN SCHALTGETRIEBE EINES NUTZFAHRZEUGS**
CLUTCH DEVICE FOR A GEARBOX OF A UTILITY VEHICLE
DISPOSITIF D'EMBRAYAGE POUR UNE BOÎTE DE VITESSES D'UN VÉHICULE UTILITAIRE

(30) Priorität: 21.07.2020 DE 102020119185
(43) Veröffentlichungstag der Anmeldung: 31.05.2023
(73) Patentinhaber: KNORR-BREMSE Systeme für Nutzfahrzeuge GmbH, 80809 München (DE)
(72) Erfinder: HUBER, Christian, 80937 München (DE); FIEBER, Martin, 85259 Wiedenzhausen (DE)
(86) Internationale Anmeldenummer: PCT/EP2021/068792
(87) Internationale Veröffentlichungsnummer: WO 2022/017787

(56) Entgegenhaltungen:
- EP-A2- 1 365 167
- DE-A1- 102009 042 807
- DE-B3- 102018 104 676

## Beschreibung

Die Erfindung betrifft eine Kupplungsvorrichtung für ein Schaltgetriebe eines Nutzfahrzeugs.

Viele Schaltgetriebe von Nutzfahrzeugen, insbesondere für den Nah- und Verteilerverkehr, Fernverkehr sowie auch für den Überland- und Reisebusverkehr, weisen eine Gruppenbauweise mit einer Vielzahl von Gangstufen auf. Dieser Aufbau wird bei Nutzfahrzeugen zunehmend für automatisierte Schaltgetriebe (AMT) verwendet.

Schaltgetriebe für Nutzfahrzeuge können prinzipiell unterschiedliche Automatisierungsgrade aufweisen. Dabei können je nach Ausführung der Anfahrvorgang, die Betätigung der Schaltkupplung sowie die Gangwahl automatisiert erfolgen. Bei Handschaltgetrieben ist keiner dieser Vorgänge automatisiert, bei teilautomatisierten Schaltgetrieben ist einer dieser Vorgänge automatisiert und bei vollautomatischen Schaltgetrieben erfolgen alle Vorgänge automatisiert. Hieraus ergibt sich die Notwendigkeit, geeignete Betätigungseinrichtungen für eine automatisierte Anfahrkupplung, ein automatisiertes Kuppeln beim Schalten und/oder eine automatisierte Gangwahl und ein Motormanagement einzusetzen. Für die Schaltautomatisierung ist dabei insbesondere die genaue Erfassung der Position der Schaltelemente zur Optimierung und Effizienzsteigerung des automatisierten Schaltablaufs relevant. Die Sensorik hierfür befindet sich üblicherweise im Bereich des Getriebes. Für die Erfassung der Kupplungsposition ist eine Sensierung des Kupplungsaktuators erforderlich. Beispielsweise wird ein Positionssensor eingeschraubt. Die Montage im Servicefall erfolgt zudem blind. Folglich kann nicht unter allen Umständen oder nur unter größeren Aufwänden sichergestellt werden, dass der Positionssensor in einer vorbestimmten Referenzposition gehalten wird, was Einfluss auf die Genauigkeit der Positionserfassung hat.

Die DE 10 2009 042 807 A1 betrifft eine Anordnung aus einem Zylinder und einem an diesem befestigten Sensorgehäuse, wobei der Zylinder insbesondere ein Geber- oder Nehmerzylinder eines hydraulischen Kupplungssystems eines Fahrzeuges ist. Die Positionsbestimmung des im Zylinder axial beweglich gelagerten Kolbens bzw. die Erfassung des Stellweges bzw. der Stellung der beweglichen Komponente des Kupplungsausrücksystems erfolgt über einen Sensor sowie eine Sensorbaugruppe, die in einem Sensorgehäuse angeordnet ist.

Die DE 10 2018 104 676 B3 betrifft einen Nehmerzylinder für eine Kupplungsbetätigungseinrichtung eines Kraftfahrzeuges, mit einem Gehäuse, einem in dem Gehäuse verschiebbar aufgenommenen sowie mit dem Gehäuse einen fluidischen Druckraum begrenzenden Kolben, wobei der Kolben eine den Druckraum zu einer Umgebung hin abdichtende Dichtung aufweist, und mit einer zur Erfassung einer Position des Kolbens entlang seines Verschiebeweges ausgebildeten Sensoreinrichtung, wobei ein Geberteil der Sensoreinrichtung verschiebefest an dem Kolben aufgenommen ist, wobei das Geberteil in einer in dem Gehäuse ausgebildeten Führungsbahn entlang des Verschiebeweges des Kolbens relativ zu dem Gehäuse geführt ist.

Die EP 1 365 167 A2 betrifft eine Vorrichtung zum wahlweise Aus- bzw. Einrücken einer Reibkupplung für Kraftfahrzeug. Die Vorrichtung umfasst eine Sensoreinrichtung mit einem Sensor zur Erfassung einer für den Aus- bzw. Einrückzustand und/oder den Verschleißzustand der Reibkupplung repräsentativen Größe.

In Anbetracht der vorstehenden Ausführung ist es somit Aufgabe der vorliegenden Erfindung, eine Kupplungsvorrichtung für ein Schaltgetriebe eines Nutzfahrzeugs bereitzustellen, durch die die Genauigkeit der Positionserfassung verbessert werden kann.

Die Aufgabe wird durch eine Kupplungsvorrichtung für ein Schaltgetriebe eines Nutzfahrzeugs gemäß dem unabhängigen Anspruch gelöst. Vorteilhafte Weiterbildungen der Erfindung sind in den abhängigen Ansprüchen enthalten.

Erfindungsgemäß weist eine Kupplungsvorrichtung für ein Schaltgetriebe eines Nutzfahrzeugs einen Kupplungsaktuator, einen Sensor zur Detektion einer Position des Kupplungsaktuators sowie einen Sensoranschlag mit einer Anschlagsfläche, die eine vorbestimmte Position des Sensors in einer Abstandsrichtung zum Kupplungsaktuator definiert, auf, wobei der Sensor über ein elastisches Element in der Abstandsrichtung in positionsfester Beziehung zum Sensoranschlag haltbar ist.

Über das elastische Element wird der Sensor demnach gegen die Anschlagsfläche des Sensoranschlags gedrückt. Der Sensor nimmt daher eine vorbestimmte Referenzposition ein. Insbesondere können hierdurch auch Luftspalte zwischen dem Sensor und der Anschlagsfläche, die die Genauigkeit des Sensors nachteilig beeinflussen könnten, vermieden oder zumindest reduziert werden.

Erfindungsgemäß ist das elastische Element zwischen dem Sensor und einer der Anschlagsfläche gegenüberliegenden Ventileinheit angeordnet.

Das elastische Element kann sich somit an der Ventileinheit abstützen und wird im eingebauten Zustand zwischen der Ventileinheit und dem Sensor gehalten. Somit benötigen weder der Sensor noch das elastische Element zwingend zusätzliche Befestigungsmittel. Zudem kann der Sensor mit dem elastischen Element und der Ventileinheit bei Montage der Ventileinheit direkt in einem Schritt mit verbaut werden. Hierzu können zur Bildung der Baugruppe für den Montagevorgang oder Transport Befestigungsmittel, wie Verschraubungen vorgesehen werden. Nach der Montage könnte aber alleinig im Hinblick auf die Funktionsausübung der Sensorhalterung, wie angeführt, auf diese Befestigungsmittel zwischen den Baugruppenkomponenten verzichtet werden.

In einer Ausgestaltung wird der Sensoranschlag durch ein Kupplungsaktuatorgehäuse gebildet.

Der Sensor wird somit gegen eine durch das Kupplungsaktuatorgehäuse gebildete Anschlagsfläche gedrückt. Da das Kupplungsaktuatorgehäuse für den Kupplungsaktuator eine Positionsreferenz bildet, also die Position des Kupplungsaktuators in Bezug auf das Kupplungsaktuatorgehäuse beschrieben werden kann, kann der Sensor somit eine vergleichbare Positionsreferenz bilden.

In einer Weiterbildung ist der Sensor in einer Ebene parallel zur Anschlagsfläche schwimmend gelagert.

Auch wenn die Anschlagsfläche des Sensoranschlags eine einseitige Positionsbegrenzung für den Sensor darstellt, ist der Sensor zumindest in der Ebene senkrecht zur Anschlagsrichtung beweglich, um beispielsweise translatorische oder rotatorische Ausgleichsbewegungen in dieser Ebene ausführen zu können. Zudem kann das elastische Element derart konfiguriert sein, dass auch entsprechende Ausgleichbewegungen in einer Ebene parallel zur Anschlagsrichtung, also beispielsweise zum elastischen Element hin, ermöglicht werden. Die schwimmende Lagerung dient einerseits der Unterstützung des gleichmäßigen Andrückens des Sensors an die Anschlagsfläche, kann aber auch ebenso zur Schwingungskompensation genutzt werden. Zudem kann hierüber auch die Austauschbarkeit des Sensors vereinfacht werden.

Insbesondere liegt eine dem Sensor abgewandte Seite des elastischen Elements über ihre Gesamtfläche an der Ventileinheit an.

Der Sensor kann sich somit über das elastische Element mit seiner gesamten der Ventileinheit zugewandten Fläche an der Ventileinheit abstützen, so dass die Andrückkraft gleichmäßig auf den Sensor verteilt wird. So können beispielsweise unerwünschte Verkippungen des Sensors vermieden werden.

Gemäß einer Ausgestaltung umfasst das elastische Element ein Federelement aus Federstahl, insbesondere als Spiralfeder, Blattfeder, Tellerfeder oder Wellenfeder, oder ist aus diesem ausgebildet.

Federelemente aus Federstahl, insbesondere Spiralfedern, Blattfedern, Tellerfedern oder Wellenfedern, sind günstig verfügbar und bieten ein breites Einsatzspektrum hinsichtlich einstellbarer Federkräfte und Umgebungsbedingungen.

Alternativ oder ergänzend umfasst das elastische Element ein Federelement aus einem Elastomer, insbesondere einem ausgestanzten oder gespritzten Elastomer, oder ist aus diesem ausgebildet.

Elastomere können eine nahezu beliebige Formgebung annehmen und bieten somit gerade in konstruktiver Hinsicht vielerlei Gestaltungsfreiheiten. Zusätzlich zum Elastomer können gemäß einer ergänzenden Ausgestaltung Federelemente aus Federstahl im Elastomer oder zusammen mit dem Elastomer das elastische Element ausbilden.

Weiter alternativ oder ergänzend umfasst das elastische Element eine reibungsverringernde Beschichtung, insbesondere eine PTFE-Beschichtung, bevorzugt zumindest auf einer dem Sensor abgewandten Seite des elastischen Elements, oder ist aus dieser ausgebildet.

Eine reibungsverringernde Beschichtung, wie eine PTFE-Beschichtung, also eine Polytetrafluorethylen beinhaltende Beschichtung, kann beispielsweise die Reibung zwischen der Ventileinheit und dem elastischen Element verringern, so dass die schwimmende Lagerung des Sensors unterstützt wird. Entsprechend kann alternativ oder ergänzend auch die dem Sensor zugewandte Seite des elastischen Elements eine solche reibungsverringernde Beschichtung aufweisen. Der Begriff "reibungsverringernd" ist auf eine Beschichtung gerichtet, die beispielsweise gegenüber einem direkten Kontakt zwischen Sensor und Ventileinheit bei einem zwischen diesen angeordneten elastischen Element eine geringere Reibung bewirkt.

In einer Ausführung weist der Sensoranschlag zumindest einen von der Anschlagsfläche in Richtung des Sensors und/oder der Sensor zumindest einen von einer der Anschlagsfläche zugewandten Seite in Richtung des Sensoranschlags weisenden Vorsprung, insbesondere einen mit zunehmenden Abstand von der Anschlagsfläche bzw. von der der Anschlagsfläche zugewandten Seite des Sensors von dieser weiter weg weisenden Vorsprung als Einführschräge, auf.

Der Vorsprung kann beispielsweise aus Leitblechen gebildet sein oder auch als eine Ausnehmung ausgebildet sein, wie bei dem dem Kupplungsaktuatorgehäuse zuordenbaren Sensoranschlag eine gegenüber der Kupplungsaktuatorgehäuseoberfläche rückversetzte Anschlagsfläche. Insbesondere kann der Vorsprung bzw. die Ausnehmung mit einer Einführschräge ausgebildet werden, d.h. einen vom Vorsprungsursprung sich öffnenden Winkel aufweisen, so dass die Einführung des Sensors auf die Anschlagsfläche erleichtert wird. Der Vorsprung kann die gesamte Anschlagsfläche umfassen oder auch abschnittsweise ausgebildet werden. Vergleichbar kann der Vorsprung auch am Sensor gebildet werden, um beispielsweise mit einem hierzu korrespondierenden Vorsprung oder einer hierzu korrespondierenden Ausnehmung des Sensoranschlags zur Positionierung des Sensors zusammenzuwirken.

Insbesondere ist die Erstreckung des zumindest einen Vorsprungs in einer Richtung senkrecht zur Anschlagsfläche kleiner als die Mindesterstreckung des elastischen Elements in dieser Richtung.

Demnach ist beispielsweise die durch den Vorsprung gebildete Aufnahmetiefe für den Sensor in Richtung der Anschlagsfläche kleiner als der für das elastische Element auf einer der Anschlagsfläche abgewandten Seite des Sensors vorzusehene Montageraum in dieser Richtung. Mit anderen Worten kann somit durch Entfernen des elastischen Elements genügend Raum geschaffen werden, um auch den Sensor aus der durch den Vorsprung gebildeten Aufnahme zu nehmen. Hierdurch wird die Austauschbarkeit des Sensors unterstützt.

Gemäß einer Ausgestaltung ist der Sensor dazu angepasst, eine Position eines mit dem Kupplungsaktuator in positionsfester Beziehung stehenden Magnets zu detektieren.

Der Magnet stellt dabei das die Position des Kupplungsaktuators repräsentierende und über den Sensor zu detektierende Zielobjekt dar und/oder wirkt mit dem Magneten zur Positionserfassung des Kupplungsaktuators zusammen. Durch Anordnung des Magneten kann das Zielobjekt beispielsweise in Abhängigkeit konstruktiver und/oder messtechnischer Randbedingungen günstig zum Sensor bzw. zur Referenzposition angeordnet werden.

Insbesondere ist der Sensor als Magnetsensor, insbesondere als Hall-Sensor, 3D-Hall-Sensor, GMR-Sensor oder AMR-Sensor, oder als induktiver Sensor, insbesondere als PLCD-Sensor, ausgebildet.

Der Magnetsensor kann dabei insbesondere mit dem vorstehenden Magneten des Kupplungsaktuators zur Positionserfassung herangezogen werden.

In einer Ausführung ist der Sensor über Stecker, Leitungen und/oder Stanzgitter mit einer Steuerungsvorrichtung zur Steuerung des Schaltgetriebes verbindbar.

Demnach kann die Position des Kupplungsaktuators bzw. ein entsprechendes Positionssignal an die Steuerung des Schaltgetriebes weitergeleitet werden, um verschiedene Automatisierungsgrade des Schaltgetriebes umzusetzen. Die Signalweiterleitung kann aber auch zur Überwachung des Schaltgetriebes eingesetzt werden.

Im Folgenden wird die Erfindung unter Bezugnahme auf die beigefügten Figuren näher erläutert. Die Figuren zeigen im Einzelnen:
**Figur 1** eine schematische Querschnittsansicht einer Kupplungsvorrichtung gemäß einer ersten Ausführungsform.
**Figur 2** eine schematische Querschnittsansicht eines Ausschnitts einer Kupplungsvorrichtung gemäß einer zweiten Ausführungsform.
**Figur 3** eine Draufsicht senkrecht zur Querschnittsansicht des Ausschnitts der Kupplungsvorrichtung nach **Figur 2****.**

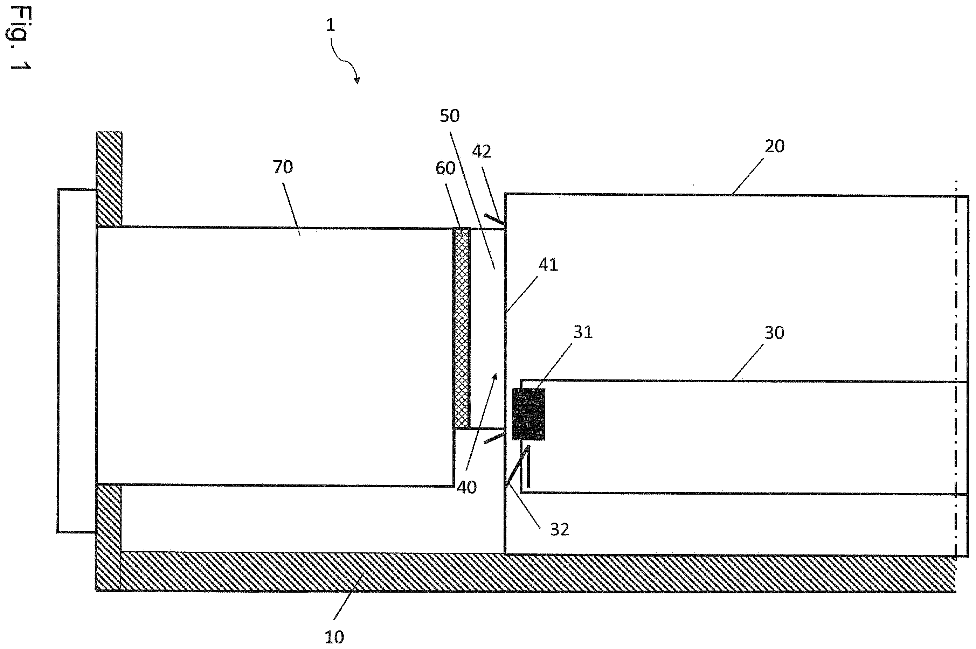

**Figur 1** ist eine schematische Querschnittsansicht einer Kupplungsvorrichtung 1 gemäß einer ersten Ausführungsform. Die Kupplungsvorrichtung 1 weist ein Kupplungsgehäuse 10 sowie ein darin angeordnetes Kupplungsaktuatorgehäuse 20 mit einem Kolben 30 als Kupplungsaktuator mit einer Kolbendichtung 32 auf. An einer Stirnseite senkrecht zur Kolbenbewegungsrichtung des Kolbens 10 ist ein Magnet 31 angeordnet, der demnach mit dem Kolben 10 in positionsfester Beziehung mitbewegt wird. Der jeweilige Abstand des Magnets 31 zu einer ihm in Kolbenbewegungsrichtung zugewandten Seite des Kupplungsaktuatorgehäuses 10 korrespondiert zu einer jeweiligen Position des Kolbens 10. Der Sensor 50 wird entsprechend derart angeordnet, dass dieser in Abstandsrichtung zum Kolben 30 eine vorbestimmte Position als Referenzposition einnimmt. Die Abstandsrichtung des Sensors 50 zum Kolben 30 bzw. Magnet 31 ist hier die Bewegungsrichtung des Kolbens 30. Demnach kann über absolute oder relative Abstandsänderungen und/oder direkte

Abstandserfassungen des Magneten 31 durch den Sensor 50 die für eine Ansteuerung und/oder Überwachung der Kupplungsvorrichtung 1 erforderliche Position des Kolbens 30 als Kupplungsaktuator detektiert werden.

Zur Anordnung des Sensors 50 in einer als Referenzposition heranziehbaren Position weist das Kupplungsaktuatorgehäuse 20 auf einer dem Magneten 31 in Kolbenbewegungsrichtung zugewandten Kupplungsaktuatorgehäusewandung einen Sensoranschlag 40 auf. Konkret ist hier der Sensoranschlag 40 auf der dem Magnet 31 abgewandten Seite der Kupplungsaktuatorgehäusewandung. Wie in **Figur 1** gezeigt, weist der Sensoranschlag eine Anschlagsfläche 41 sowie einen Vorsprung 42 auf. Der Vorsprung 42 wird hier über ein von der Anschlagsfläche 41 in Richtung des Sensors 50 und sich dabei mit zunehmendem Abstand von der Anschlagsfläche 41 weiter hiervon weg weisendes Leitblech gebildet. Mit anderen Worten bildet der Vorsprung 42 Einführschrägen aus, um beispielsweise den Sensor 50 bei der Montage leichter auf der Anschlagsfläche 41 positionieren zu können. Der Vorsprung ist hier exemplarisch um die Anschlagsfläche 41 umlaufend ausgebildet, kann aber auch nur abschnittsweise vorgesehen werden.

Der Sensor 50 wird zur Beibehaltung der positionsfesten Beziehung zur Anschlagsfläche 41 in Abstandsrichtung zum Magnet 31 in der Kolbenbewegungsrichtung über ein elastisches Element 60 gegen die Anschlagsfläche 41 gedrückt. Hierdurch wird insbesondere eine Referenzposition in positionsfester Beziehung zur Anschlagsfläche 41 gebildet, die keinen oder zumindest nur einen geringen Luftspalt zwischen dem Sensor 50 und der Anschlagsfläche 41 bildet, um eine möglichst genaue Messung erreichen zu können. In der gezeigten Ausführungsform ist das elastische Element 60 zwischen dem Sensor 50 und einer Ventileinheit 70 angeordnet. Die Ventileinheit 70 wird beispielsweise in eine Öffnung des Kupplungsgehäuses 10 eingeführt und durch Befestigungsmittel oder anderweitige Befestigungsmechanismen im Kupplungsgehäuse 10 gehalten. Da aufgrund von Montage- und/oder Fertigungstoleranzen der Abstand zwischen der Ventileinheit 70 und der Anschlagsfläche 41 des Sensoranschlags 40 variieren kann, kann der Sensor 50 über das elastische Element 60 dennoch sicher in der als Referenzposition vorbestimmten Position angeordnet und gehalten werden. Das elastische Element 60 stützt sich hierzu gegen die dem Sensor 50 zugewandte Fläche der Ventileinheit 70 ab.

Dabei liegt in **Figur 1** über die dem Sensor 50 abgewandte Seite des elastischen Elements 60 über ihre Gesamtfläche an der dem Sensor zugewandten Fläche der Ventileinheit 70 an. Hierdurch kann eine gleichmäßige Verteilung der Andrückkraft auf über das elastische Element 60 auf den Sensor 50 erreicht werden. Das elastische Element 60 und/oder der Sensor 50 sind ebenfalls derart konfiguriert, dass eine gleichmäßige Lastverteilung bzw. Lastaufnahme ermöglicht wird.

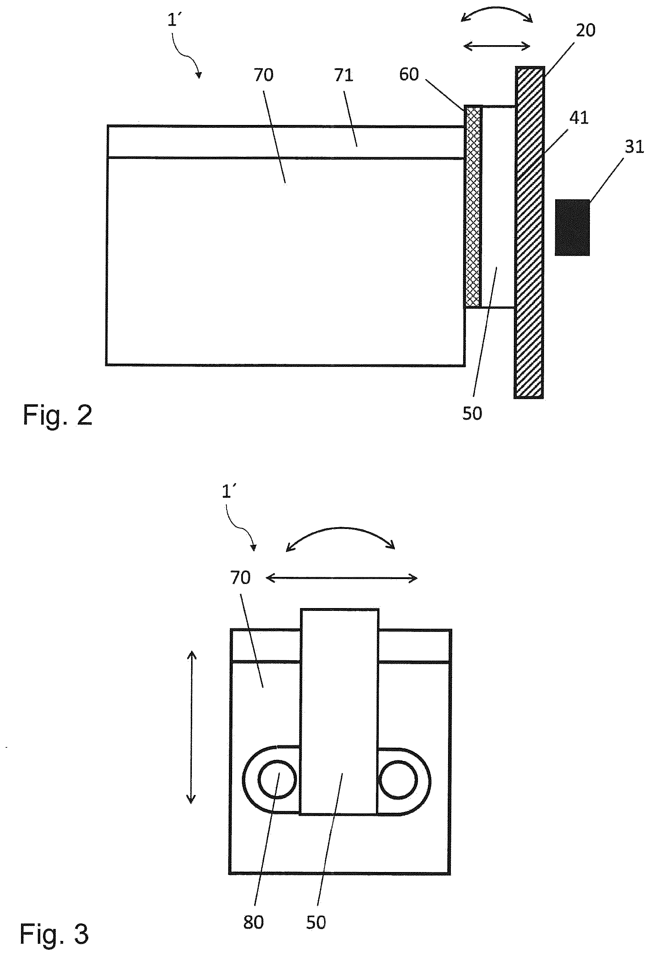

**Figur 2** stellt eine schematische Querschnittsansicht eines Ausschnitts einer Kupplungsvorrichtung 1' gemäß einer zweiten Ausführungsform dar. Die Kupplungsvorrichtung 1' ist in den in **Figur 2** nicht gezeigten Komponenten mit der in **Figur 1** dargestellten Kupplungsvorrichtung 1 vergleichbar, so dass hier der lediglich zur Erläuterung von weiteren Funktionsweisen und Unterschieden heranzuziehende Ausschnitt veranschaulicht ist.

Die in **Figur 2** gezeigte Kupplungsvorrichtung 1' unterscheidet sich dabei von der Kupplungsvorrichtung 1 nach **Figur 1** dadurch, dass das elastische Element 60 derart an der Ventileinheit 70 angeordnet wird, dass sie die der Ventileinheit zugewandte Fläche des elastischen Elements 60 nicht mehr über seine Gesamtfläche an der Ventileinheit 70 abstützt. Hierdurch können sich weitere Freiheitsgrade in der konstruktiven Ausgestaltung der Kupplungsvorrichtung 1' im Hinblick auf eine Positionierung des Sensors 50 und/oder einer Dimensionierung der Kupplungsvorrichtungskomponenten ergeben. Auch kann eine begrenzte Abstützung des elastischen Elements 60 durch die Ventileinheit 70 bei einer von einer parallelen Beabstandung abweichende Anordnung des Sensors 50 zur Ventileinheit 70 in Abstandsrichtung des Sensors 50 zum Magnet 31 in Kolbenbewegungsrichtung Vorteile bieten.

Zudem wird hier durch die Sichtkante in der Ventileinheit 70 ein Gehäusedeckel 71 der Ventileinheit 70 gezeigt. Dieser ist für die Kupplungsvorrichtung 1 nicht explizit dargestellt, kann aber gleichermaßen vorhanden sein. Durch entsprechende Dimensionierung des Gehäusedeckels 71 und dessen möglichen Austausch kann beispielsweise die Anlagefläche des elastischen Elements 60 an der Ventileinheit 70 angepasst werden. Hierdurch kann die Lastverteilung bzw. Verteilung der Andrückkraft bedarfsgerecht angepasst werden.

Im Folgenden wird anhand der Kupplungsvorrichtung 1' unter Bezugnahme auf die **Figuren 2 und 3** eine Ausgestaltung einer schwimmenden Lagerung für den Sensor 50 exemplarisch erläutert. **Figur 3** zeigt hierzu eine Draufsicht senkrecht zur Querschnittsansicht des Ausschnitts der Kupplungsvorrichtung 1' nach **Figur 2****.** Die schwimmende Lagerung des Sensors 50 ist dabei nicht auf die Kupplungsvorrichtung 1' gemäß der zweiten Ausführungsform beschränkt, sondern kann gleichermaßen auf die Kupplungsvorrichtung 1 gemäß der ersten Ausführungsform angewendet werden.

Durch die Andrückkraft des elastischen Elements 60 wird der Sensor 50 gegen die durch das Kupplungsaktuatorgehäuse 20 gebildete Anschlagsfläche 41 gedrückt. Über die elastische Verformbarkeit des elastischen Elements 60 weist der Sensor 60 dennoch in Abhängigkeit der Andrückkraft dieser entgegenwirkenden äußeren Kräften die durch Pfeile in den **Figuren 2 und 3** dargestellten grundsätzlichen Freiheitsgrade auf. Der Begriff "grundsätzlich" repräsentiert die vorstehend angesprochene Abhängigkeit der Bewegung gemäß vorliegender Kraftverhältnisse. Die dadurch erreichbare schwimmende Lagerung des Sensors 50 mit bis zu drei Freiheitsgraden in einer Ebene parallel zur Anschlagsfläche 41 nach **Figur 3** und/oder bis zu zwei Freiheitsgraden in einer senkrechten Ebene zur Anschlagsfläche 41 nach Figur 2 ermöglicht beispielsweise sowohl eine sichere Positionierung des Sensors 50 an der Anschlagsfläche 41 selbst als auch eine entsprechende Schwingungskompensation und den Ausgleich thermisch bedingter Bauteilausdehnungen. Durch die schwimmende Lagerung ergeben sich sowohl translatorische als auch rotatorische Ausgleichsmöglichkeiten.

Die in **Figur 3** gezeigte Darstellung der Kupplungsvorrichtung 1' veranschaulicht zudem Befestigungsmittel 80, über die das elastische Element 60 und/oder der Sensor 50 an der Ventileinheit befestigt werden können. Auch hier ist die exemplarische Beschreibung anhand der Kupplungsvorrichtung 1' gleichermaßen auf die Kupplungsvorrichtung 1 anwendbar. Die Befestigungsmittel 80 können als Schrauben ausgebildet sein, über die das elastische Element 60 und/oder der Sensor 50 mit der Ventileinheit verschraubbar sind. Die Befestigung des elastischen Elements 60 und/oder des Sensors 50 ist dabei nicht auf eine finale Positionierung gerichtet, um den Sensor 50 hierüber schon in einer Referenzposition anzuordnen. Die Referenzposition ergibt sich gemäß vorstehender Ausführung über die Andrückkraft des elastischen Elements 60 in Abstandsrichtung des Sensors 50 zum Magnet 31 in Kolbenbewegungsrichtung, um den Sensor 50 gegen die Anschlagsfläche 41 zu drücken. Auch kann das elastische Element 60 derart konfiguriert sein, dass hierüber der Sensor 50 an der Anschlagsfläche 41 und/oder das elastische Element 60 gehalten werden kann. Die Befestigungsmittel 80 können das elastische Element 60 und/oder den Sensor 50 aber zusätzlich halten, um eine Sicherheit zu erhöhen und/oder insbesondere zum Transport und der Montage einer Baugruppe, die die Ventileinheit 70, das elastische Element 60 und den Sensor 50 aufweist, genutzt werden. Beispielsweise kann eine solche Baugruppe in einer Gehäuseöffnung der Kupplungsvorrichtung 1' eingebracht werden. Der Sensor 50 wird auf der Anschlagsfläche 41 positioniert. Die Befestigungsmittel 80 halten dabei zum Beispiel den Sensor 50 derart, dass dieser zwar durch die Ventileinheit 70 gehalten wird, aber sich immer noch in den zur Positionierung und zum Ausgleich vorgesehen Freiheitsgraden zumindest über eine gewisse Bewegungsstrecke bewegen kann. Demnach müssen die Befestigungsmittel 80 nach der Montage nicht zwingend entfernt werden, um eine schwimmende Lagerung erreichen zu können. Nachdem der Sensor 50 an der Anschlagsfläche 41 positioniert wurde, kann nun die Ventileinheit 70 am Kupplungsgehäuse 10 oder dergleichen arretiert werden. Selbst wenn der Arretierungsvorgang der Ventileinheit 70 unter Umständen nochmals zu eine Änderung der Position der Ventileinheit 70 in Abstandsrichtung des Sensors 50 zum Magnet 31 hervorrufen könnte, wird dies durch das elastische Element 60 ausgeglichen. Dies ist gerade dann von Vorteil, wenn nach entsprechender Montage und Arretierung keine Zugänglichkeit zur Positionskorrektur für den Sensor 50 besteht oder eine Nachjustage zumindest nur unter erheblichem Aufwand durchführbar ist.

Die Erfindung ist nicht auf die beschriebenen Ausführungsformen beschränkt. Auch kann beispielsweise ein Sensor, wie für eine Drehzahl- oder Positionserfassung, von außen in das Getriebe eingeführt und durch eine Gehäusekomponente, wie eine Konsole gehalten werden. Grundsätzlich sind Merkmale einer Ausführungsform auch auf andere Ausführungsformen übertragbar und mit weiteren Merkmalen kombinierbar, sofern sich dies nicht vernünftigerweise ausschließt.

### BEZUGSZEICHENLISTE

- 1, 1': Kupplungsvorrichtung
- 10: Kupplungsgehäuse
- 20: Kupplungsaktuatorgehäuse
- 30: Kolben
- 31: Magnet
- 32: Kolbendichtung
- 40: Sensoranschlag
- 41: Anschlagsfläche
- 42: Vorsprung
- 50: Sensor
- 60: elastisches Element
- 70: Ventileinheit
- 71: Gehäusedeckel (Ventileinheit)
- 80: Befestigungsmittel

## Patentansprüche

1. Kupplungsvorrichtung (1, 1') für ein Schaltgetriebe eines Nutzfahrzeugs, aufweisend:
einen Kupplungsaktuator (30),
eine Ventileinheit (70),
einen Sensor (50) zur Detektion einer Position des Kupplungsaktuators (30) sowie
einen Sensoranschlag (40) mit einer Anschlagsfläche (41), die eine vorbestimmte Position des Sensors (50) in einer Abstandsrichtung zum Kupplungsaktuator (30) definiert,
wobei der Sensor (50) über ein elastisches Element (60) in der Abstandsrichtung in positionsfester Beziehung zum Sensoranschlag (40) gehalten wird, **dadurch gekennzeichnet, dass**
das elastische Element (60) zwischen dem Sensor (50) und einer der Anschlagsfläche (41) gegenüberliegenden Ventileinheit (70) angeordnet ist.

2. Kupplungsvorrichtung (1, 1') nach Anspruch 1, wobei der Sensoranschlag (40) durch ein Kupplungsaktuatorgehäuse (20) gebildet wird.

3. Kupplungsvorrichtung (1, 1') nach Anspruch 1 oder 2, wobei der Sensor (50) in einer Ebene parallel zur Anschlagsfläche (41) schwimmend gelagert ist.

4. Kupplungsvorrichtung (1) nach einem der vorherigen Ansprüche, wobei eine dem Sensor (50) abgewandte Seite des elastischen Elements (60) über ihre Gesamtfläche an der Ventileinheit (70) anliegt.

5. Kupplungsvorrichtung (1, 1') nach einem der vorherigen Ansprüche, wobei das elastische Element (60) ein Federelement aus Federstahl, insbesondere als Spiralfeder, Blattfeder, Tellerfeder oder Wellenfeder, umfasst oder aus diesem ausgebildet ist.

6. Kupplungsvorrichtung (1, 1') nach einem der vorherigen Ansprüche, wobei das elastische Element (60) insbesondere alternativ oder ergänzend zu dem vorhergehenden Anspruch ein Federelement aus einem Elastomer, insbesondere einem ausgestanzten oder gespritzten Elastomer, umfasst oder aus diesem ausgebildet ist.

7. Kupplungsvorrichtung (1, 1') nach einem der vorherigen Ansprüche, wobei das elastische Element (60) eine reibungsverringernde Beschichtung, insbesondere eine PTFE-Beschichtung, bevorzugt zumindest auf einer dem Sensor (50) abgewandten Seite des elastischen Elements (60), umfasst oder aus dieser ausgebildet ist.

8. Kupplungsvorrichtung (1, 1') nach einem der vorherigen Ansprüche, wobei der Sensoranschlag (40) zumindest einen von der Anschlagsfläche (41) in Richtung des Sensors (50) und/oder der Sensor (50) zumindest einen von einer der Anschlagsfläche zugewandten Seite in Richtung des Sensoranschlags weisenden Vorsprung (42), insbesondere einen mit zunehmenden Abstand von der Anschlagsfläche (41) bzw. von der der Anschlagsfläche (41) zugewandten Seite des Sensors (50) von dieser weiter weg weisenden Vorsprung als Einführschräge, aufweist, oder der Vorsprung als entsprechende Ausnehmung ausgebildet ist.

9. Kupplungsvorrichtung (1, 1') nach Anspruch 8, wobei die Erstreckung des zumindest einen Vorsprungs (42) in einer Richtung senkrecht zur Anschlagsfläche (41) kleiner als die Mindesterstreckung des elastischen Elements (60) in dieser Richtung ist.

10. Kupplungsvorrichtung (1, 1') nach einem der vorherigen Ansprüche, wobei der Sensor (50) dazu angepasst ist, eine Position eines mit dem Kupplungsaktuator (30) in positionsfester Beziehung stehenden Magnets (31) zu detektieren.

11. Kupplungsvorrichtung (1, 1') nach einem der vorherigen Ansprüche, wobei der Sensor (50) als Magnetsensor, insbesondere als Hall-Sensor, 3D-Hall-Sensor, GMR-Sensor oder AMR-Sensor, oder als induktiver Sensor, insbesondere als PLCD-Sensor, ausgebildet ist.

12. Kupplungsvorrichtung (1,1 ') nach einem der vorherigen Ansprüche, wobei der Sensor (50) über Stecker, Leitungen und/oder Stanzgitter mit einer Steuerungsvorrichtung zur Steuerung des Schaltgetriebes verbindbar ist.

## Claims

1. Clutch device (1, 1') for a gearbox of a utility vehicle, having:
a clutch actuator (30),
a valve unit (70),
a sensor (50) for detecting a position of the clutch actuator (30), and
a sensor stop (40) with a stop surface (41) which defines a predetermined position of the sensor (50) in a distance direction relative to the clutch actuator (30),
wherein the sensor (50) is held by an elastic element (60) in the distance direction in a fixed position relative to the sensor stop (40), **characterized in that**
the elastic element (60) is arranged between the sensor (50) and a valve unit (70) opposite the stop surface (41).

2. Clutch device (1, 1') according to claim 1, wherein the sensor stop (40) is formed by a clutch actuator housing (20).

3. Clutch device (1, 1') according to claim 1 or 2, wherein the sensor (50) is mounted in a floating manner in a plane parallel to the stop surface (41).

4. Clutch device (1) according to any one of the preceding claims, wherein a side of the elastic element (60) facing away from the sensor (50) bears against the valve unit (70) over its entire surface.

5. Clutch device (1, 1') according to any one of the preceding claims, wherein the elastic element (60) comprises or is formed by a spring element made of spring steel, in particular a coil spring, leaf spring, disc spring or wave spring.

6. Clutch device (1, 1') according to any one of the preceding claims, wherein the elastic element (60) comprises or is formed by a spring element made from an elastomer, in particular a stamped or molded elastomer, in particular as an alternative or in addition to the preceding claim.

7. Clutch device (1, 1') according to any one of the preceding claims, wherein the elastic element (60) comprises or is formed by a friction-reducing coating, in particular a PTFE coating, preferably at least on a side of the elastic element (60) facing away from the sensor (50).

8. Clutch device (1, 1') according to any one of the preceding claims, wherein the sensor stop (40) has at least one projection pointing from the stop surface (41) towards the sensor (50) and/or the sensor (50) has at least one projection (42) pointing from a side facing the stop surface towards the sensor stop, in particular a projection pointing further away from the stop surface (41) or from the side of the sensor (50) facing the stop surface (41) as the distance increases, as a lead-in chamfer, or the projection is formed as a corresponding recess.

9. Clutch device (1, 1') according to claim 8, wherein the extension of the at least one projection (42) in a direction perpendicular to the stop surface (41) is smaller than the minimum extension of the elastic element (60) in this direction.

10. Clutch device (1, 1') according to any one of the preceding claims, wherein the sensor (50) is adapted to detect a position of a magnet (31) that is in a fixed position relative to the clutch actuator (30).

11. Clutch device (1, 1') according to any one of the preceding claims, wherein the sensor (50) is in the form of a magnetic sensor, in particular a Hall sensor, 3D Hall sensor, GMR sensor or AMR sensor, or an inductive sensor, in particular a PLCD sensor.

12. Clutch device (1, 1') according to any one of the preceding claims, wherein the sensor (50) can be connected via plugs, cables and/or leadframes to a control device for controlling the gearbox.

## Revendications

1. Dispositif d'accouplement (1, 1') pour une boîte de vitesses d'un véhicule utilitaire, présentant :
un actionneur d'accouplement (30),
une unité de soupape (70),
un capteur (50) pour détecter une position de l'actionneur d'accouplement (30), ainsi
qu'une butée de capteur (40) avec une surface de butée (41) qui définit une position prédéterminée du capteur (50) dans une direction d'écartement par rapport à l'actionneur d'accouplement (30),
dans lequel le capteur (50) est maintenu dans une relation de position fixe par rapport à la butée de capteur (40) dans la direction d'écartement par l'intermédiaire d'un élément élastique (60), **caractérisé en ce que**
l'élément élastique (60) est disposé entre le capteur (50) et une unité de soupape (70) opposée à la surface de butée (41).

2. Dispositif d'accouplement (1, 1') selon la revendication 1, dans lequel la butée de capteur (40) est formée par un boîtier d'actionneur d'accouplement (20).

3. Dispositif d'accouplement (1, 1') selon la revendication 1 ou 2, dans lequel le capteur (50) est monté de manière flottante dans un plan parallèle à la surface de butée (41).

4. Dispositif d'accouplement (1) selon l'une quelconque des revendications précédentes, dans lequel un côté de l'élément élastique (60) opposé au capteur (50) repose sur sa surface totale contre l'unité de soupape (70).

5. Dispositif d'accouplement (1, 1') selon l'une quelconque des revendications précédentes, dans lequel l'élément élastique (60) comprend ou est formé à partir d'un élément à ressort en acier à ressort, en particulier en tant que ressort en spirale, ressort à lame, ressort à disque ou ressort ondulé.

6. Dispositif d'accouplement (1, 1') selon l'une quelconque des revendications précédentes, dans lequel l'élément élastique (60) comprend ou est formé à partir d'un élément à ressort en un élastomère, en particulier un élastomère découpé ou moulé par injection, en particulier en alternative ou en complément à la revendication précédente.

7. Dispositif d'accouplement (1, 1') selon l'une quelconque des revendications précédentes, dans lequel l'élément élastique (60) comprend ou est formé à partir d'un revêtement réduisant le frottement, en particulier un revêtement en PTFE, de préférence au moins sur un côté de l'élément élastique (60) opposé au capteur (50).

8. Dispositif d'accouplement (1, 1') selon l'une quelconque des revendications précédentes, dans lequel la butée de capteur (40) présente au moins une saillie (42) orientée depuis la surface de butée (41) en direction du capteur (50) et/ou le capteur (50) présente au moins une saillie orientée depuis un côté tourné en direction de la surface de butée vers la butée de capteur, en particulier une saillie s'éloignant de plus en plus de la surface de butée (41) ou du côté du capteur (50) tourné vers la surface de butée (41) à mesure que la distance s'accroît, en tant que pente d'introduction, ou la saillie est formée en tant qu'évidement correspondant.

9. Dispositif d'accouplement (1, 1') selon la revendication 8, dans lequel l'extension de l'au moins une saillie (42) dans une direction perpendiculaire à la surface de butée (41) est inférieure à l'extension minimale de l'élément élastique (60) dans cette direction.

10. Dispositif d'accouplement (1, 1') selon l'une quelconque des revendications précédentes, dans lequel le capteur (50) est adapté pour détecter une position d'un aimant (31) en relation de position fixe avec l'actionneur d'accouplement (30).

11. Dispositif d'accouplement (1, 1') selon l'une quelconque des revendications précédentes, dans lequel le capteur (50) est conçu en tant que capteur magnétique, en particulier comme en tant que capteur à effet Hall, capteur à effet Hall 3D, capteur GMR ou capteur AMR, ou en tant que capteur inductif, en particulier en tant que capteur PLCD.

12. Dispositif d'accouplement (1, 1') selon l'une quelconque des revendications précédentes, dans lequel le capteur (50) peut être connecté à un dispositif de commande pour commander la boîte de vitesses par l'intermédiaire de connecteurs, câbles et/ou grilles estampées.
